# EUROPEAN PATENT SPECIFICATION

(11) **EP 2 443 376 B1**
(45) Date of publication and mention of the grant of the patent: **09.07.2014**
(21) Application number: 10728922.5
(22) Date of filing: 15.06.2010
(51) Int. Cl.: F16L 27/047

(54) **PIPE CONNECTOR**
ROHRVERBINDUNG
RACCORD DE TUYAUX

(30) Priority: 15.06.2009 NO 20092309
(43) Date of publication of application: 25.04.2012
(73) Proprietor: Subsea Design A/S, 3012 Drammen (NO)
(72) Inventor: PETTERSEN, Bjørn, N-3080 Holmestrand (NO); VAAGE, Birger, N-1389 Heggedal (NO)
(74) Representative: Oslo Patentkontor AS
(86) International application number: PCT/NO2010/000230
(87) International publication number: WO 2010/147479

(56) References cited:
- US-A- 2 424 897
- US-A- 3 329 449
- US-A- 4 236 738

## Description

### Technical field of the invention

The invention is a connector for pipes which are used for transportation of powder, grain, gas and fluids.

The connector is designed such that pipes with a moderate angular misalignment can be connected without bending of the pipes, and without loss of sealing capacity.

### Background

US 4 236 738 discloses a pipe connector for pipes having an angular misalignement, according to the preamble of claim 1.

Pipe flanges are often misaligned before connection. Common practice is to pull the flanges together with axial force and application of bending moment, until the flanges become parallel. This is necessary to generate sufficient preload of the flanges.

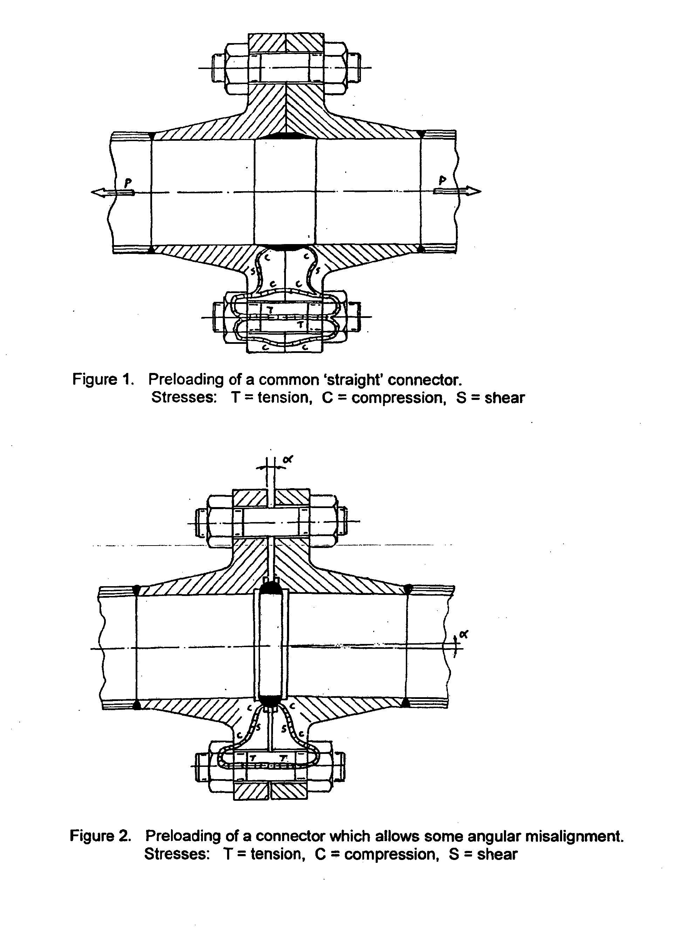

### Figure 1 shows the principle:

The flange bolts, or a clamp, press the flanges (or hubs) together and generate two load paths in the process:
a) A primary load path between the flanges around each bolt or clamp interface.
b) A secondary load path between the flanges and the seal ring

The load paths are shown in figure 1 as ribbons.

An axial force (P) will first reduce the compressive stress between the flanges, since the primary load path is more rigid than the secondary load path. The flanges will remain in contact as long as the axial force is less than the preload between the flanges, and there will be no significant additional stretching of the bolts, and no significant increase of the bolt loads.

Additional axial load after the flanges have separated will act directly on the bolts. The bolts will stretch, the flanges will move apart, the seal will slip in its seats and leakage will begin. The flange preload is what secures the connection against leakage.

Preloading of misaligned flanges will normally result in bending of the pipes, and induce permanent bending stresses in the pipes. This may require stronger pipes to resist the internal pressure in the pipes.

There are other types of connectors where the flanges are not in contact with each other, or only partly in contact. The preload between the flanges acts instead through the seal ring.

### See figure 2.

The seal has a small contact area against the flanges, and it is made from a relatively soft material, compared with the flanges. The preload must be low to avoid damaging the seal.

These connectors can be made up with an angle (α) between the pipe centerlines.

A tensile axial force will act practically directly on the bolts. The bolts will stretch, the flanges will move apart, the seal will slip in its seats, and leakage will begin.

These connectors are not suitable for high pressure pipes.

### Description of the invention

The present invention provides a pipe connector which avoids one or more of the above-mentioned drawbacks found with prior art connectors. The pipes can be connected without changing the angular misalignment. The connector is designed such that preload can still be achieved directly between the flanges, bypassing the seal.

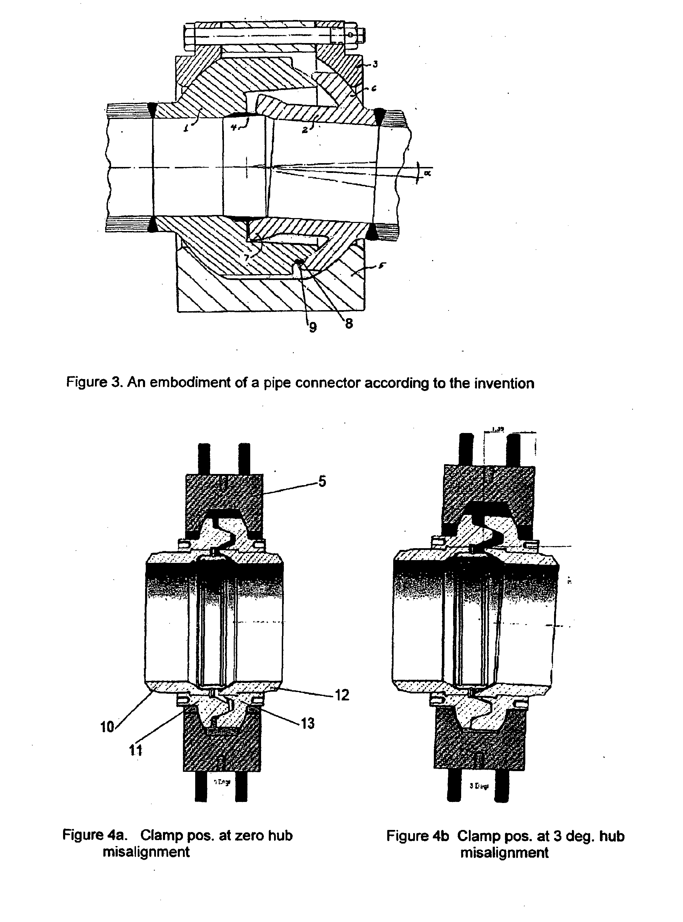

Figure 3 shows a section through the invention.

It consists of the following parts:
1) Hub A, or a first hub
2) Hub B, or a second hub
3) Retainer (ring)
4) Seal ring
5) Bolts or segmented clamp
6) Thrust ring (A spherical flange on the hub B)
7) Nose (part of hub B)
8) Backup seal
9) Environmental seal

Hub B with the thrust ring has four spherical surfaces. The surfaces have their common center approximately at the center of the seal ring. The four spherical surfaces are located:
- At the interface with the seal ring
- At the interface with hub A (nose of hub B against inside of hub A)
- At the interface with hub A (Thrust ring against hub A)
- At the interface with the retainer.

The spherical surfaces at the interface of hub B and the seal ring shall provide sealing of the pipe. This shall also seal when hub B has an angular misalignment in relation to the seal ring.

The surfaces at the interface of hub B and the inside of hub A function as a guide for hub B during connection. It is also a suitable location for a back-up seal.

The spherical surfaces at the interface of the thrust ring and hub A shall primarily transfer axial force, and provide a load bypass of the seal ring. This also applies to the spherical surfaces at the interface between the thrust ring and the retainer. Note that the thrust ring and its location is a major difference between this invention and other similar inventions.

Hub B may be fitted with a 'nose' (7) for guiding during connection. The nose slides against the inside of hub A, centering hub B in relation to hub A, before hub B comes in contact with the seal ring. This is to avoid damaging the seal ring. It is particularly important for large and heavy connectors. See figure 3.

The make-up sequence of the invention is as follows: (See figure 3)
- The seal ring (4) is installed in hub A (1).
- Hub B (2) is pushed against hub A.
- Hub B is centered by hub A. (Nose (7) against inner diameter of hub A).
- Hub B enters over the seal ring.
- The segmented clamp (5) is mounted on the outside of the hubs. The retainer (3) is part of this clamp.
- The clamp is tightened, and clamps the thrust ring between hub A and the retainer. The angular misalignment of hub B remains unchanged.

When the invention is loaded by a tensile axial force:
- The tensile force follows this load path: Hub B - thrust ring - retainer - clamp - hub A. The tensile axial force bypasses the seal ring.

When the invention is loaded by a compressive axial force:
- The compressive force follows this load path: Hub B - thrust ring - hub A. The compressive axial force bypasses the seal ring.

**Further preferred embodiments of the invention**
a) There may be a small clearance between the thrust ring and the retainer / hub A after connection, such that hub B can rotate about a transverse axis. This will allow the hub to adjust to pipe displacement after installation, without causing significant bending moment on the connection.
b) A dynamic connector (flex joint) is a connector where the angle of rotation about
   a transverse axis varies repeatedly. The invention can be used as a flexible joint of a pipe, when clearance between the thrust ring and the retainer / hub A are combined with a suitable (dynamic) seal ring.
c) Each hub may consist of two different pieces, see figure 4a and 4b: An inner hub (10, 12) which interfaces with the seal, and an outer hub (11, 13) (or flange) which interfaces with the other outer hub (11, 13) and the retainer/clamp (3, 5). The outer hubs may be manufactured in a different material from the inner hubs, and be interference fit over the inner hubs. The purpose of this is to optimize the material characteristics of the various parts of the connector.
d) The interface of the retainer/clamp (3, 5) with the hub and thrust ring may be non- spherical as shown in figures 4a and 4b. The clamp will adapt different positions depending on the angular misalignment of the hubs. This arrangement allows use of a narrower clamp, and reduces the total width of the connector and provides a uniform load distribution.

## Claims

1. A pipe connector for connection of pipes having a moderate angular misalignment, comprising a first hub (1) and a second hub (2), wherein the second hub (2) comprises an external thrust ring (6) and a nose (7), the thrust ring comprising a spherical inner and outer surface, said thrust ring being pressed and locked against the first hub (1) by a clamping device (5) during connection, a seal ring (4) being in contact with an inner surface of the first hub
**characterized in that**
the seal ring (4) is in contact with an inner spherical surface of the nose (7), said seal ring (4) being wide enough to bridge and seal a gap between the inner surface of the nose (7) and the inner surface of the first hub.

2. Pipe connector according to claim 1, wherein a clearance between the thrust ring and the first hub or the clamping device allows the second hub to rotate about a transverse axis and adjust to pipe displacement after the connection is made up.

3. Pipe connector according to claim 1 or 2, wherein the seal ring (4) is suitable for dynamic movement.

4. Pipe connector according to any of the preceding claims, wherein the connector is provided with a back-up seal (8) for the seal ring (4).

5. Pipe connector according to any of the preceding claims, wherein the connector is provided with environmental seals (9) to prevent intrusion of external medium into the connector.

6. Pipe connector according to any of the preceding claims, wherein the first hub and the second hub each comprise an inner hub (10, 12) weldable to the pipe, and an outer hub/flange (11, 13).

7. Pipe connector according to claim 6, wherein the inner hub (10, 12) and the outer hub/flange (11, 13) are constructed from different materials.

8. Pipe connector according to claim 6 or 7, wherein the outer hub/flange (11, 13) is interference fit or mechanically attached to the outside of the inner hub (10, 12).

9. Pipe connector according to any of the preceding claims, wherein the clamp (5) has non-spherical contact surfaces with the first hub and thrust ring (6), such that the clamp adjusts to the misalignment of the hubs during connector make-up, and produces a uniform load distribution around the first hub and thrust ring (6).

10. Pipe connector according to any of the preceding claims, wherein the parts of the inner surface of the first hub which are in contact with the seal ring comprise a conical surface.

## Patentansprüche

1. Rohrverbindung zum Verbinden von Rohren, die einen mäßigen Winkelversatz zueinander aufweisen, umfassend einen ersten Ansatz (1) und einen zweiten Ansatz (2), wobei der zweite Ansatz (2) einen externen Druckring (6) und eine Nase (7) aufweist, wobei der Druckring eine sphärische Innen- und Außenoberfläche aufweist, wobei der Druckring während die Verbindung besteht durch eine Klemmeinrichtung (5) an den ersten Ansatz (1) gedrückt und verriegelt ist, wobei ein Dichtungsring (4) mit einer Innenoberfläche des ersten Ansatzes in Kontakt steht,
**dadurch gekennzeichnet, dass**
der Dichtungsring (4) in Kontakt mit einer sphärischen Innenoberfläche der Nase (7) steht, wobei der Dichtungsring (4) breit genug ist, eine Spalte zwischen der Innenoberfläche der Nase (7) und der Innenoberfläche des ersten Ansatzes zu überbrücken und abzudichten.

2. Rohrverbindung gemäß Anspruch 1, bei der ein Spiel zwischen dem Druckring und dem ersten Ansatz oder der Klemmeinrichtung es dem zweiten Ansatz ermöglicht, um eine Querachse zu rotieren und sich an eine Rohrverschiebung anzupassen, nachdem das Verbinden erfolgt ist.

3. Rohrverbindung gemäß Anspruch 1 oder 2, bei der der Dichtungsring (4) für eine dynamische Bewegung geeignet ist.

4. Rohrverbindung gemäß einem der vorhergehenden Ansprüche, bei der die Verbindung mit einer Stützdichtung (8) für den Dichtungsring (4) versehen ist.

5. Rohrverbindung gemäß einem der vorhergehenden Ansprüche, bei der die Verbindung mit Umweltdichtungen (9) versehen ist, um das Eindringen externen Mediums in die Verbindung zu verhindern.

6. Rohrverbindung gemäß einem der vorhergehenden Ansprüche, bei der der erste Ansatz und der zweite Ansatz jeweils einen inneren Ansatz (10, 12), der mit dem Rohr verschweißbar ist, und einen äußeren Ansatz/Flansch (11, 13) aufweisen.

7. Rohrverbindung gemäß Anspruch 6, bei der der innere Ansatz (10, 12) und der äußere Ansatz/Flansch (11, 13) aus unterschiedlichen Materialien gefertigt sind.

8. Rohrverbindung gemäß Anspruch 6 oder 7, bei der der äußere Ansatz/Flansch (11, 13) an der Außenseite des inneren Ansatzes (10, 12) pressgepasst oder mechanisch befestigt ist.

9. Rohrverbindung gemäß einem der vorhergehenden Ansprüche, bei der die Klemme (5) nicht-sphärische Kontaktoberflächen zu dem ersten Ansatz und Druckring (6) aufweist, so dass sich die Klemme dem Versatz der Ansätze während des Einrichtens der Verbindung anpasst und eine gleichmäßige Lastverteilung um den ersten Ansatz und den Druckring (6) herum erzeugt.

10. Rohrverbindung gemäß einem der vorhergehenden Ansprüche, bei der die Teile der Innenoberfläche des ersten Ansatzes, die in Kontakt mit dem Dichtungsring stehen, eine konische Oberfläche umfassen.

## Revendications

1. Raccord de tuyau pour le raccordement de tuyaux ayant un désalignement angulaire modéré, comprenant un premier moyeu (1) et un second moyeu (2), dans lequel le second moyeu (2) comprend une bague de butée externe (6) et un nez (7), la bague de butée comprenant une surface interne et externe sphérique, ladite bague de butée étant appuyée et verrouillée contre le premier moyeu (1) par un dispositif de serrage (5) pendant le raccordement, une bague d'étanchéité (4) étant en contact avec une surface interne du premier moyeu,
**caractérisé en ce que**
la bague d'étanchéité (4) est en contact avec une surface sphérique interne du nez (7), ladite bague d'étanchéité (4) étant assez large pour combler et étanchéifier un écartement entre la surface interne du nez (7) et la surface interne du premier moyeu.

2. Raccord de tuyau selon la revendication 1, dans lequel un débattement entre la bague de butée et le premier moyeu ou le dispositif de serrage permet au second moyeu de tourner autour d'un axe transversal et de s'adapter à un déplacement de tuyau après que le raccordement est constitué.

3. Raccord de tuyau selon la revendication 1 ou 2, dans lequel la bague d'étanchéité (4) est appropriée pour un mouvement dynamique.

4. Raccord de tuyau selon l'une quelconque des revendications précédentes, dans lequel le raccord est pourvu d'un joint de secours (8) pour la bague d'étanchéité (4).

5. Raccord de tuyau selon l'une quelconque des revendications précédentes, dans lequel le raccord est pourvu de joints environnementaux (9) pour empêcher une intrusion d'un milieu externe dans le raccord.

6. Raccord de tuyau selon l'une quelconque des revendications précédentes, dans lequel le premier moyeu et le second moyeu comprennent chacun un moyeu interne (10, 12) soudable sur le tuyau, et un moyeu/une bride externe (11, 13).

7. Raccord de tuyau selon la revendication 6, dans lequel le moyeu interne (10, 12) et le moyeu/la bride externe (11, 13) sont construits à partir de matériaux différents.

8. Raccord de tuyau selon la revendication 6 ou 7, dans lequel le moyeu/la bride externe (11, 13) est fixé(e) mécaniquement ou par ajustement avec serrage sur l'extérieur du moyeu interne (10, 12).

9. Raccord de tuyau selon l'une quelconque des revendications précédentes, dans lequel l'attache (5) comporte des surfaces de contact non sphériques avec le premier moyeu et la bague de butée (6), de sorte que l'attache s'adapte au désalignement des moyeux pendant la constitution du raccord, et produit une répartition de charge uniforme autour du premier moyeu et de la bague de butée (6).

10. Raccord de tuyau selon l'une quelconque des revendications précédentes, dans lequel les parties de la surface interne du premier moyeu qui sont en contact avec la bague d'étanchéité comprennent une surface conique.
